# EUROPÄISCHE PATENTSCHRIFT

(11) **EP 1 283 239 B1**
(45) Veröffentlichungstag und Bekanntmachung des Hinweises auf die Patenterteilung: **21.06.2006**
(21) Anmeldenummer: 02016715.1
(22) Anmeldetag: 26.07.2002
(51) Int. Cl.: C08K 5/20, C08K 5/3445

(54) **Bituminöse Massen, enhaltend basische Mischungen aus Alkylamidoaminen und Alkylaminoimidazolinen als Haftvermittler**
Bitumen compositions containing alkaline mixtures of alkylamidoamine and alkylaminoimidazolines as adhesion promoters
Utilisation de mélanges basiques d'alkylaminoamides et d'alkylaminoimidazolines comme promoteur d'adhésion dans des compositions bitumineuses

(30) Priorität: 08.08.2001 DE 10138964
(43) Veröffentlichungstag der Anmeldung: 12.02.2003
(73) Patentinhaber: Goldschmidt GmbH, 45127 Essen (DE)
(72) Erfinder: Ballandies, Jürgen, 45277 Essen (DE); Jussofie, Ibrahim, Dr., 45239 Essen (DE); Keup, Michael, Dr., 45147 Essen (DE)

(56) Entgegenhaltungen:
- WO-A-91/00315
- FR-A- 1 602 767
- GB-A- 856 373

## Beschreibung

Gegenstand der Erfindung sind bituminöse Massen aus Bitumen, Füllstoffen, Haftvermittlern und gegebenenfalls üblichen Zusätzen und Modifizierungsmitteln, welche dadurch gekennzeichnet sind, dass sie als Haftvermittler basische Mischungen aus Alkylamidoaminen und Alkylaminoimidazolinen enthalten.

Bituminöse Massen werden im Bautenschutz als Anstrichstoff oder als Vergussmasse verwendet. Weitere Anwendungsgebiete sind Abdichtungsmittel gegen Grundwasser, elektrisches Isoliermaterial, in der Dachpappen-Industrie, die Herstellung von Folien, Platten, Formkörpern, Kitten, Spachtelmassen, Bindemittel für eine Vielzahl von organischen und anorganischen Substraten wie Kunststoffen, Papier, Pappe, recycelbare Stoffe wie Bauschutt oder Schlacken aus industriellen Verfahren und als Bindemittel für problematische asbesthaltige Stoffe.

Wegen ihrer erhöhten Temperatur- und Verformungsbeständigkeit eignen sich Bitumen/Gesteinsmischungen (welche auch als Asphalt bezeichnet werden) besonders als Material für Trag- und Binderschichten im Straßenbau. Die wesentlichen Bestandteile sind hierbei Bitumen, mineralische Füllstoffe, Haftvermittler und gegebenenfalls Kunststoffe und Mineralöle.

Wesentlich für die Qualität der Asphalte ist eine möglichst vollständige Umhüllung der mitverwendeten Füllstoffe. Um diese gut zu benetzen und/oder einzukapseln, werden daher üblicherweise Haftvermittler wie Fettamine, Imidazolidine, Polyamine, quaternäre Ammoniumverbindungen, Fettsäuren, N-beta-Aminoethylalkylimidazolin und Bis(silylpropyl)polysulfane, z.B. (H₅C₂O)₃-Si (CH₂)₃-S₄-(CH₂)₃-Si (OC₂H₅)₃ mitverwendet, welche dem Bitumen zugesetzt werden.

Haftvermittler verbessern die Affinität des Bindemittels gegenüber einer mineralischen Oberfläche, so dass sie größer ist als die der mineralischen Oberfläche gegen Wasser. Das Bindemittel ist dann in der Lage, Wasser von der Gesteinsoberfläche zu verdrängen und vollständig zu benetzen. Sie verhindern außerdem, dass Feuchtigkeit den Bindemittelfilm unterwandern und ablösen kann (z.B. Frostschäden).

Da die gebräuchlichen Bitumina bei normalen Temperaturen fest sind, müssen sie zur Erzielung eines auf den Substraten haftenden Überzugs verflüssigt werden. Das kann durch Erhitzen auf entsprechend hohe Verflüssigungstemperaturen von üblicherweise ca. 160 °C oder höher geschehen.

Beim Einsatz von Bitumen, insbesondere im Strassenbau, werden in der Regel große Mengen verarbeitet. Entsprechend groß sind daher auch die beheizten Tanks, in denen das Bitumen aufgeschmolzen und in flüssiger Form bereitgestellt und gelagert wird.

Die gemäß dem bekannten Stand der Technik als Haftvermittler eingesetzten Verbindungen sind bei diesen Temperaturen jedoch nicht stabil. Sie zersetzen sich bereits nach verhältnismäßig kurzen thermischen Belastungszeiten und verlieren ihre Wirkung.

Zur Kompensation war es demzufolge in der Regel erforderlich, entweder gleich zu Beginn stark erhöhte Mengen zuzusetzen und/oder nachzudosieren.

Es bestand daher in der Praxis ein Bedarf nach stabilen Haftvermittlern, welche bei Temperaturen oberhalb von 160 °C, vorteilhafterweise jedoch bei 180 °C oder darüber über einen praxisgerechten Zeitraum von mehreren Tagen im Bitumen thermisch belastet werden können ohne an Wirksamkeit zu verlieren.

Eine Aufgabe der vorliegenden Erfindung war es daher, die Nachteile der bekannten Haftvermittler zu überwinden und thermisch stabile Verbindungen mit haftvermittelnder Wirkung in bituminösen Bindemitteln zur Verfügung zu stellen.

Gelöst wird diese Aufgabe erfindungsgemäß durch die gemäß Patentanspruch 1 definierten Alkylamidoaminverbindungen.

Ein Gegenstand der Erfindung sind bituminöse Massen aus Bitumen, Füllstoffen, Haftvermittlern und gegebenenfalls üblichen Zusätzen und Modifizierungsmitteln, dadurch gekennzeichnet, dass sie als Haftvermittler Verbindungen, erhältlich durch Umsetzung von einbasischen Carbonsäuren mit einem geradkettigen, gegebenenfalls verzweigten gegebenenfalls Mehrfachbindungen und/oder Substituenten enthaltenden Kohlenwasserstoffrest mit 1 bis 29 C-Atomen, mit Diethylentriamin und/oder N-Alkyl-diethylentriamin und/oder N,N-Dialkyl-diethylentriamin nach an sich bekannten Verfahren, als 30 bis 65 Gew.-%ige Lösungen in Diethylentriamin enthalten.

Ein weiterer Gegenstand der Erfindung ist die Verwendung der erfindungsgemäßen bituminösen Massen zur Herstellung von Folien, Platten, Formkörpern, Kitten, Spachtelmassen, Dach- und Dichtungswerkstoffen und insbesondere zu Asphalten für den Straßenbau.

Weitere vorteilhafte Ausführungsformen der Erfindung sind in den abhängigen Unteransprüchen angegeben.

Solche Verbindungen wurden in isolierter Form bereits als Haftvermittler für bituminöse Massen vorgeschlagen, erfüllten jedoch nicht die Erfordernisse hinsichtlich Thermostabilität und Umhüllungsvermögen nach mehrstündiger thermischer Belastung bei Temperaturen oberhalb 160 °C.

Die Verbindungen gemäß Stand der Technik werden durch Umsetzung von einbasischen Carbonsäuren mit Diethylentriamin und/oder N-Alkyl-diethylentriamin und/oder N,N-Dialkyl-diethylentriamin nach an sich bekannten Verfahren hergestellt.

Im allgemeinen werden Fettsäure bzw. Fettsäureester und Amin im Molverhältnis 1 : 1 bis 1 : 2 zusammengegeben und unter Inertgasatmosphäre unter gutem Rühren auf Reaktionstemperatur von ca. 140 bis 200 °C aufgeheizt und das entstehende Kondensat (Wasser oder Alkohol) kontinuierlich abdestilliert. Gegen Ende der Reaktion kann ein Unterdruck zur Entfernung überschüssigen Amins und Resten von Kondensat angelegt werden.

Dem Fachmann ist bekannt, das zur Herstellung der Verbindungen der Formel (I) die Reaktion vorteilhafterweise bei möglichst niedrigen Temperaturen um ca. 140 bis 180 °C durchgeführt wird. Werden die Reaktionstemperaturen erhöht, die Reaktionszeiten und gegebenenfalls die Vakuumphase verlängert, werden überwiegend Verbindungen der allgemeinen Formel (II) erhalten.

Überraschenderweise wurde nun gefunden, dass beide Kriterien (Thermostabilität und Umhüllunosvermögen) erfüllt werden, wenn diese Verbindungen gelöst in Diethylentriamin eingesetzt werden.

Es wurde gefunden, dass unter diesen Bedingungen ein dynamisches Gleichgewicht zwischen der offenkettigen Verbindung der Formel (I) und der Ringverbindung der Formel (II) vorliegt.

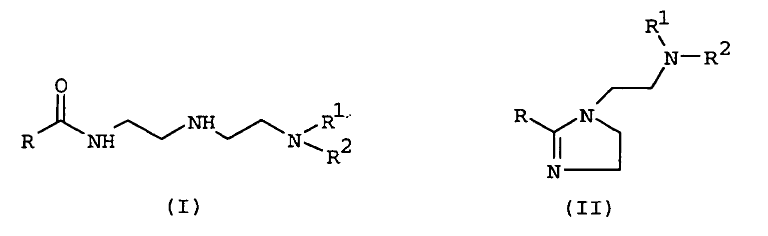

Es wird vermutet, dass dieses Gleichgewicht die Ursache für die - im Vergleich zu den jeweiligen isolieren Einzelkomponenten - unerwartet hohe thermische Stabilität der erfindungsgemäßen Mischungen ist. Das Reaktionsgemisch wurde daher bei einer Temperatur von 180 °C und verschiedenen Zeiten gelagert (Frisch, 1 h 180 °C, 4 h 180 °C, 7 h 180 °C, 24 h 180 °C, 48 h 180 °C und 72 h 180 °C).

Die quantitative ¹³C-NMR-spektroskopischen Untersuchungen der gelagerten Produkte in CDCl₃ haben gezeigt, dass das Gemisch bei dieser Temperatur in einem Gleichgewicht steht.

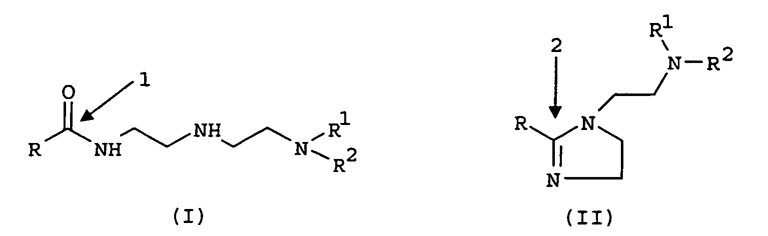

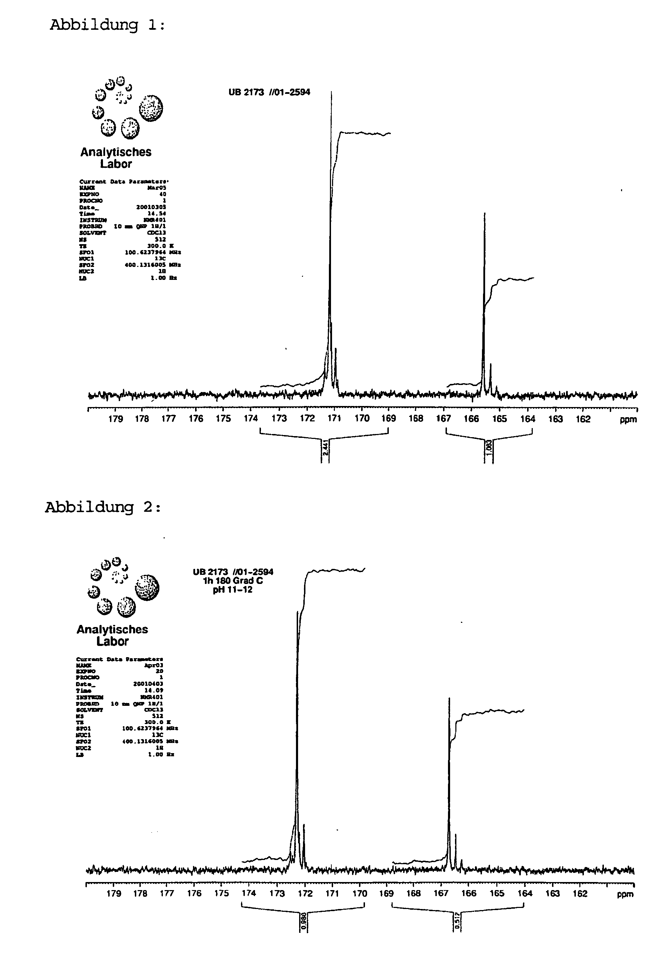

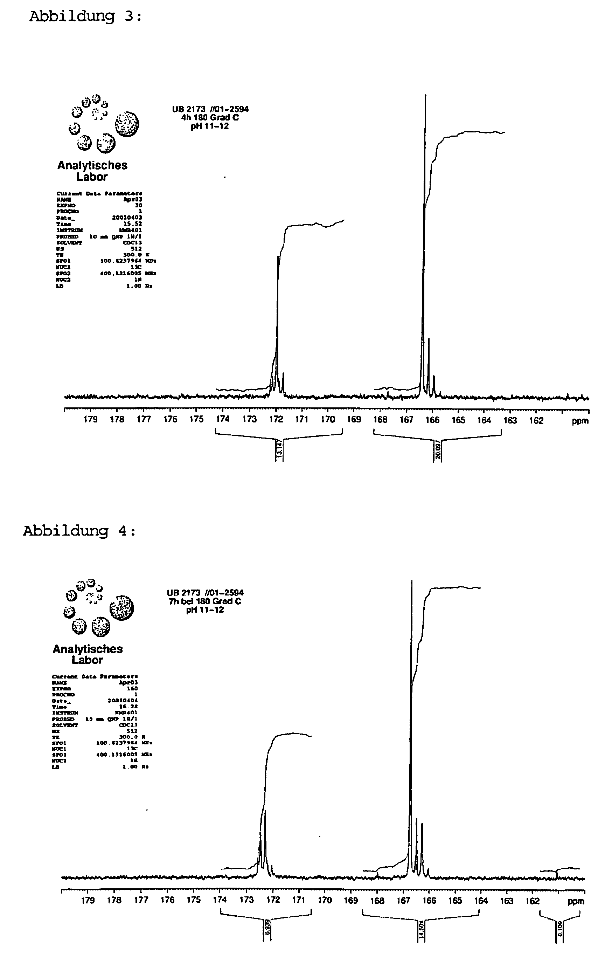

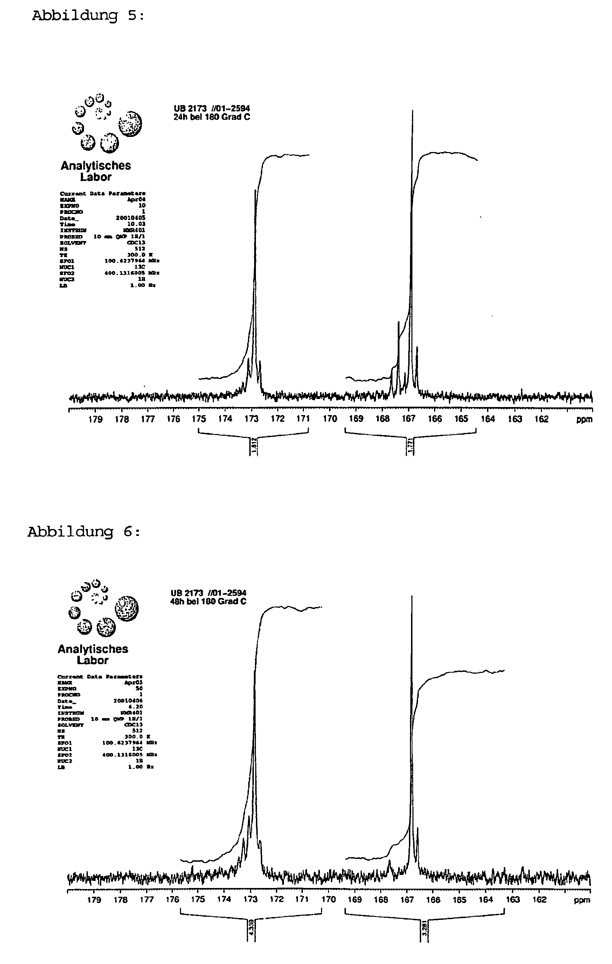

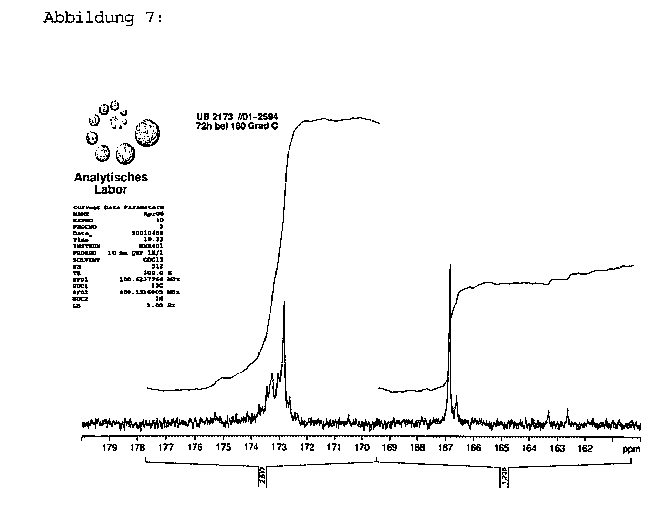

In den ¹³C-NMR-Spektren (Abbildungen 1 bis 7) ergeben sich folgende chemische Verschiebungen der C₁ und C₂-Atome.

| | | |
|---|---|---|
| C | 1 | 2 |
| δ (ppm) | 173 | 167 |

Vorteilhafterweise wird die Reaktion von Fettsäure(ester) und Diethylentriamin (DTA) mit einem Überschuss an DTA, im Molverhältnis 1 : 1,5 bis 1 : 9, insbesondere ca. 1 : 3 bis 1 : 6, durchgeführt. Der Überschuss wird dabei vorteilhafterweise so gewählt, dass nach Beendigung der Reaktion die gewünschte Konzentration vorliegt. Diese sind weitgehend unkritisch und können so bemessen werden, das dass Umsetzungsprodukt in Konzentrationen von 10 bis 90 Gew.-%, vorzugsweise 30 bis 65 Gew.-% und insbesondere 40 bis 60 Gew.-% in der Mischung enthalten ist.

Aus verfahrenstechnischen Gründen werden erfindungsgemäß Mischungen aus Verbindungen der allgemeinen Formeln (I) und (II) in DTA eingesetzt.

Es ist aber durchaus möglich, andere organische und/oder anorganische Basen welche in der Mischung gelöst vorliegen und den pH-Wert auf ca. > 10 erhöhen, zu verwenden oder mitzuverwenden, wie beispielsweise Alkanolamine wie Aminoethylethanolamin, Diethanolamin, Methyl-diisopropanolamin, Triethanolamin, Isopropanolamine, Hydroxyethyl-diethylentriamin, Bis-(hydroxyethyl)-ethylendiamin, Hexamethylendiamin; Polyamine wie Tetraethylenpentamin, Pentaethylenhexamin, Xylylendiamin.

Als Fettsäuren für die Herstellung der Alkylamidoamine der Formeln (I) und (II) werden - allein oder in Mischungen - Fettsäuren wie Essigsäure, Propionsäure, Buttersäure, Capronsäure, Caprylsäure, Caprinsäure, 2-Ethylhexansäure, Laurinsäure, Myristinsäure, Palmitinsäure, Palmitoleinsäure, Isostearinsäure, Stearinsäure, Hydroxystearinsäure (Ricinolsäure), Dihydroxystearinsäure, Ölsäure, Linolsäure, Petrolesinsäure, Elaidinsäure, Arachinsäure, Behensäure und Erucasäure, Cerotinsäure, Melissensäure sowie die bei der Druckspaltung natürlicher Fette und Öle anfallenden technischen Mischungen wie Ölsäure, Linolsäure, Linolensäure, und insbesondere Rapsölfettsäure, Sojaölfettsäure, Sonnenblumenölfettsäure, Kokosfettsäure und Tallölfettsäure mitverwendet. Geeignet sind prinzipiell alle Fettsäuren mit ähnlicher Kettenverteilung.

Vorzugsweise werden längerkettige Fettsäuren mit 8 C-Atomen oder mehr eingesetzt, wie insbesondere die in den natürlichen Fetten und Ölen vorkommenden Säuren.

Der Gehalt dieser Fettsäuren bzw. Fettsäureester an ungesättigten Anteilen, wird - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Vorzugsweise werden teilgehärtete C_{8/18}-Kokos- bzw. Palmfettsäuren, Rapsölfettsäuren, Sonnenblumenölfettsäuren Sojaölfettsäuren und Tallölfettsäuren, mit Jodzahlen im Bereich von ca. 80 bis 150° und insbesondere technische C_{8/18}-Kokosfettsäuren eingesetzt, wobei gegebenenfalls eine Auswahl von cis/trans Isomeren wie elaidinsäurereiche C_{16/18}-Fettsäureschnitte von Vorteil sein können. Sie sind handelsübliche Produkte und werden von verschiedenen Firmen unter deren jeweiligen Handelsnamen angeboten.

Nach DIN 55 946 Tl. 1 (12/1983) ist Bitumen die Bezeichnung für die bei der schonenden Aufbereitung von Erdölen gewonnenen, dunkelfarbigen, halbfesten bis springharten, schmelzbaren, hochmolekularen Kohlenwasserstoff-Gemische und die in Schwefelkohlenstoff löslichen Anteile der natürlichen Asphalte sowie Erdwachs, Montanwachs.

Als Bitumen können erfindungsgemäß prinzipiell alle diese Bitumina verwendet werden. Die Wahl des eingesetzten Typs wird in erster Linie von der technischen Anwendung bestimmt. Bevorzugt werden die im Straßenbau üblicherweise verwendeten Qualitäten 15, 25, 45, 65, 80, 200, 300, 400, insbesondere Bitumina der Penetration 70 bis 200 (Typ B 80 bis Typ B 200).

Als Modifizierungsmittel können je nach Einsatzgebiet nichtthermoplastische und/oder thermoplastische Polymerkomponenten mitverwendet werden, wie beispielsweise Polyolefine, Styrol-Butadien-Styrol-Blockcopolymerisate (SBS), Ethylen-VinylacetatCopolymere (EVA).

Als Füllstoffe können alle üblichen Materialien verwendet werden. Geeignet sind insbesondere die mineralischen Füller wie Kiese, Sande, Splitt, Schiefermehl, Glimmer, Quarzmehl, Kalksteinmehl, Glasfasern, Steinwolle, die je nach technischem Anwendungsgebiet dem Bitumen allein oder in Kombination in üblichen Mengen von ca. 50 bis 90 Gew.-% zugemischt werden. Daneben finden aber auch Recyclinganwendungen wie die Einkapselung von Stoffen aus industriellen Verfahren wie Hochofen-, Metallhütten- u. Phosphorschlacke, insbesondere von problematischen asbesthaltigen Materialien zunehmend Interesse.

Beispiele für übliche Zusatzmittel sind Verarbeitungshilfsmittel wie Gleitmittel, klebrige- oder weichmachende Zusätze, Alterungsschutzmittel, Korrosionsinhibitoren, Biozide.

Die Anteile der jeweiligen Komponenten können in Abhängigkeit von dem beabsichtigten Einsatz der Bitumenmischungen und den Eigenschaften der dem Bitumen zugesetzten Stoffe in einem verhältnismäßig breiten Bereich variieren:

### Bitumen:

20 bis 90 Gew.-Teile, insbesondere 25 bis 70 Gew.-Teile; Mineralische Füllstoffe:
10 bis 90 Gew.-Teile, insbesondere 15 bis 70 Gew.-Teile; Kunststoffe:
2 bis 20 Gew.-Teile, insbesondere 5 bis 15 Gew.-Teile;

### Fasern:

0 bis 30 Gew.-Teile, insbesondere 5 bis 25 Gew.-Teile; Mineralöle (Weichmacheröle):
0 bis 15 Gew.-Teile, insbesondere 0 bis 10 Gew.-Teile.
Der Haftvermittler wird in Mengen von ca. 0,1 bis 3 Gew.-Teile, insbesondere 0,2 bis 1,0 Gew.-%, bezogen auf die Gesamtmischung, mitverwendet.

### Versuchsdurchführung:

Für die nachfolgenden Beispiele wurde ein Bitumen 80/100 verwendet.

Für die Herstellung der Alkylamidoaminverbindungen gemäß der allgemeinen Formeln (I) und (II) wurden die folgenden aufgeführten Amine und Fettsäuren mitverwendet.

Amin: H₂N-(CH₂) -NH- (CH₂) -N(R¹)(R²)
Amin I (AI) : R¹, R² = H;
Amin II(AII) : R¹, R² = CH₃;

### Fettsäure I (FS I)

Partiell hydrierte Talgfettsäure mit einer Säurezahl von 202 bis 208, einer Jodzahl von 36 bis 44 und einer C-Kettenverteilung von

| | | | |
|---|---|---|---|
| < | C 16 | ca. | 2 % |
| | C 16 | ca. | 25 % |
| | C 16' | ca. | 2 % |
| | C 17 | ca. | 2 % |
| | C 18 | ca. | 28 % |
| | C 18' | ca. | 37 % |
| | C 18" | ca. | 3 % |
| > | C 18 | ca. | 2 % |

### Fettsäure II (FS II)

Partiell hydrierte Palmfettsäure mit einer Säurezahl von 205 bis 212, einer Jodzahl von 32 bis 40 und einer C-Kettenverteilung von

| | | | |
|---|---|---|---|
| < | C 16 | ca. | 2 % |
| | C 16 | ca. | 46 % |
| | C 16' | ca. | 1 % |
| | C 17 | - | |
| | C 18 | ca. | 13 % |
| | C 18' | ca. | 36 % |
| | C 18" | ca. | 2 % |
| > | C 18 | ca. | 1 % |

### Fettsäure III (FS III)

Tallölfettsäure mit einer Säurezahl von ca. 194, einer Jodzahl von ca. 150 und einer C-Kettenverteilung von

| | | | |
|---|---|---|---|
| < | C 16 | ca. | 2 % |
| | C 16 | ca. | 2 % |
| | C 18 | ca. | 2 % |
| | C 18' | ca. | 50 % |
| | C 18" | ca. | 40 % |
| | C 18"' | ca. | 2 % |
| > | C 18 | ca. | 2 % |

| | |
|---|---|
| Fettsäure IV (FS IV): | Behensäure |
| Fettsäure V (FS V): | Stearinsäure |
| Fettsäure VI(FS VI): | Laurinsäure |
| Fettsäure VII(FS VII): | Caprinsäure |
| Fettsäure VIII(FS VIII): | 2-Ethyl-hexansäure |
| Fettsäure IX (FS IX): | Buttersäure |
| Fettsäure X (FS X): | Essigsäure |

### Herstellung der Haftvermittler:

Fettsäure und Amin wurden im Molverhältnis 1 : 6 zusammengegeben und unter Inertgasatmosphäre unter gutem Rühren auf Reaktionstemperatur von ca. 150 bis 160 °C aufgeheizt und das entstehende Kondensat (Wasser oder Alkohol) kontinuierlich abdestilliert. Nach einer Reaktionszeit von 6 Stunden wurde die Reaktion beendet und die Reaktionsmischung auf Raumtemperatur abgekühlt.

Die in der Tabelle 1 aufgelisteten Produkte wurden nach einem dieser Verfahren hergestellt.

**Tabelle 1:**

| Beispiel | Fettsäure FS | | Amin A | | Molverh. FS/A |
|---|---|---|---|---|---|
| A 1 | FS | I | A | I | 1/6 |
| A 2 | FS | II | A | I | 1/3 |
| A 3 | FS | III | A | I | 1/6 |
| A 4 | FS | IV | A | I | 1/3 |
| A 5 | FS | V | A | I | 1/6 |
| A 6 | FS | III | A | I | 1/3 |
| A 7 | FS | III | A | II | 1/3 |
| A 8 | FS | III | A | II | 1/6 |

### Prüfmethode:

Ein Referenzbitumen B 80/100 wurde mit jeweils 0,2 Gew.-% des erfindungsgemäßen Haftvermittlers versetzt und darin bei 140 bis 150 °C homogenisiert.
Die hergestellte Mischung wird je nach Anforderung zwischen 1 und 48 h oder länger bei Temperatur (160 bis 180 °C) im verschlossenen Behälter gelagert.
Die Überprüfung der haftvermittelnden Wirkung wurde gemäß der Schweizer Norm SN 671 960 "Bituminöses Mischgut Prüfvorschriften; Haftvermögen von bituminösen Bindemitteln an Mineralstoffen" durchgeführt. Ermittelt wird hierbei der Umhüllungsgrad von Mineralstoffen durch das Bindemittel nach definierter Wasserlagerung.
Als Umhüllungsgrad wird der Prozentsatz der mit Bindemittel bedeckten Mineraloberfläche angegeben.

Gemäß dieser Prüfvorschrift werden temperiertes Bindemittel und Mineralstoff auf gleiche Temperatur erwärmt und so lange intensiv gemischt, bis das Mineral 100 %ig mit Bitumen umhüllt ist. Dann wird das Mischgut mit deionisiertem Wasser überschichtet und 60 Min. gelagert. Zur Auswertung wird der Behälter in dem sich das Mischgut befindet um 90°, 180°, 270° gedreht und die Anzahl der Körner mit ihrem jeweiligen Umhüllungsgrad bestimmt. Ein Umhüllungsgrad von 100 % bedeutet, dass alle Körner bei allen Teildrehungen zu 100 % umhüllt waren.

### Versuchsergebnisse:

In der nachfolgenden Tabelle 2 sind die gemäß obiger Prüfmethode ermittelten Ergebnisse aufgelistet.

**Tabelle 2:**

| Beispiel | Produkt aus Tabelle 1 | Umhüllungsgrad nach x Stunden Belastung in % | | | | |
|---|---|---|---|---|---|---|
| | | Lagertemperatur Bitumen-/Haftmittel 170 °C | | | | |
| | | Einsatzkonzentration Haftmittel 0,2 % | | | | |
| | | 1 h | 24 h | 48 h | 72 h | 96 h |
| B 1 | A 1 | 100 | 100 | 100 | 95 | 100 |
| B 2 | A 2 | 100 | 100 | 95-100 | 95 | 95 |
| B 3 | A 3 | 100 | 100 | 100 | 100 | 100 |
| B 4 | A 4 | 100 | 95-100 | 90-95 | 90 | 70-80 |
| B 5 | A 5 | 100 | 100 | 95-100 | 95 | 95 |
| B 6 | A 6 | 100 | 100 | 100 | 90-95 | 80-90 |
| B 7 | A 7 | 100 | 100 | 95 | 90 | 90 |
| B 8 | A 8 | 100 | 100 | 100 | 95-100 | 95 |

## Patentansprüche

1. Bituminöse Massen aus Bitumen, Füllstoffen, Haftvermittlern und gegebenenfalls üblichen Zusätzen und Modifizierungsmitteln, **dadurch gekennzeichnet, dass** sie als Haftvermittler Verbindungen, erhältlich durch Umsetzung von einbasischen Carbonsäuren mit einem geradkettigen, gegebenenfalls verzweigten gegebenenfalls Mehrfachbindungen und/oder Substituenten enthaltenden Kohlenwasserstoffrest mit .1 bis 29 C-Atomen, mit Diethylentriamin und/oder N-Alkyl-diethylentriamin und/oder N,N-Dialkyldiethylentriamin nach an sich bekannten Verfahren, als 30 bis 65 Gew. -%ige Lösungen in Diethylentriamin enthalten.

2. Bituminöse Massen nach Anspruch 1, **dadurch gekennzeichnet, dass** sie als Haftvermittler Verbindungen auf der Basis natürlicher Fettsäuren enthalten.

3. Bituminöse Massen nach Anspruch 2, **dadurch gekennzeichnet, dass** als natürliche Fettsäuren Palmöl-, Tallöl-, Kokos-, Talgfettsäure verwendet werden.

4. Bituminöse Massen nach einem der Ansprüche 1 bis 3, **dadurch gekennzeichnet, dass** sie als Bitumen der Typen B 15, B 25, B 45, B 65, B 80, B 200, B 300, B 400 enthalten.

5. Verwendung der bituminösen Massen nach einem der Ansprüche 1 bis 4 zur Herstellung von Folien, Platten, Formkörpern, Kitten, Spachtelmassen, Dach- und Dichtungswerkstoffen und insbesondere zu Asphalten für den Straßenbau.

## Claims

1. Bituminous compositions comprising bitumen, fillers, adhesion promoters and, if desired, customary adjuvants and modifiers, **characterized in that** they comprise as adhesion promoters compounds obtainable by reacting monobasic carboxylic acids having a straight-chain, optionally branched hydrocarbon radical, containing 1 to 29 carbon atoms and, if desired, multiple bonds and/or substituents, with diethylenetriamine and/or N-alkyl-diethylenetriamine and/or N,N-dialkyl-diethylenetriamine by conventional methods, in the form of 30% to 65% by weight strength solutions in diethylenetriamine.

2. Bituminous compositions according to Claim 1, **characterized in that** they comprise as adhesion promoters compounds based on natural fatty acids.

3. Bituminous compositions according to Claim 2, **characterized in that** palm oil fatty acid, tall oil fatty acid, coconut fatty acid and/or tallow fatty acid are used as natural fatty acids.

4. Bituminous compositions according to any one of Claims 1 to 3, **characterized in that** they comprise B 15, B 25, B 45, B 65, B 80, B 200, B 300, B 400 bitumen grades.

5. Use of the bituminous compositions according to any one of Claims 1 to 4 for producing films, sheets, mouldings, putties, filler compounds, roofing materials and sealing materials, and particularly for asphalts for roadbuilding.

## Revendications

1. Masses bitumineuses constituées par du bitume, des charges, des promoteurs d'adhérence et le cas échéant des additifs et agents de modification usuels, **caractérisées en ce qu'**elles contiennent comme promoteurs d'adhérence des composés pouvant être obtenus par transformation d'acides carboxyliques monobasiques, présentant un radical hydrocarboné comprenant 1 à 29 atomes de carbone, linéaire, le cas échéant ramifié, comprenant le cas échéant des liaisons multiples et/ou des substituants, avec de la diéthylènetriamine et/ou de la N-alkyl-diéthylènetriamine et/ou de la N,N-dialkyl-diéthylènetriamine selon des procédés connus en soi, sous forme de solutions à 30 jusqu'à 65% en poids dans de la diéthylènetriamine.

2. Masses bitumineuses selon la revendication 1, **caractérisées en ce qu'**elles contiennent comme promoteurs d'adhérence des composés à base d'acides gras naturels.

3. Masses bitumineuses selon la revendication 2, **caractérisées en ce qu'**on utilise comme acides gras naturels de l'acide gras d'huile de palme, de tallol, de coco ou de suif.

4. Masses bitumineuses selon l'une quelconque des revendications 1 à 3, **caractérisées en ce qu'**elles contiennent comme bitumes ceux des types B 15, B 25, B 45, B 65, B 80, B 200, B 300, B 400.

5. Utilisation des masses bitumineuses selon l'une quelconque des revendications 1 à 4 pour la préparation de feuilles, de plaques, de corps façonnés, de mastics, des masses bouche-pores, de matériaux pour toiture et d'étanchéité et en particulier pour l'asphaltage pour la construction des routes.
